Europäisches Patentamt

European Patent Office

Office européen des brevets

(11) Publication number: **0 092 983**
**B1**

(12) **EUROPEAN PATENT SPECIFICATION**

(45) Date of publication of patent specification: **29.04.87**

(21) Application number: **83302281.7**

(22) Date of filing: **21.04.83**

(51) Int. Cl.⁴: **C 22 B 9/02,** C 22 B 21/00,
F 27 D 23/04, B 01 F 5/10

(54) **Molten metal stirring equipment.**

(30) Priority: **23.04.82 JP 69309/82**
**23.04.82 JP 69310/82**
**14.07.82 JP 123644/82**
**14.07.82 JP 123645/82**

(43) Date of publication of application:
**02.11.83 Bulletin 83/44**

(45) Publication of the grant of the patent:
**29.04.87 Bulletin 87/18**

(84) Designated Contracting States:
**DE FR GB IT NL**

(56) References cited:
**DE-B-1 113 577**
**GB-A-2 039 761**
**US-A-3 490 896**
**US-A-4 008 884**
**US-A-4 236 917**

(73) Proprietor: **SHINMEI ENGINEERING COMPANY
LIMITED**
**33-15, Hanakuma-cho Chuo-ku**
**Kobe-shi Hyogo-ken (JP)**

(72) Inventor: **Yonekawa, Tadao c/o Shinmei
Engineering Co. Ltd.**
**33-15, Hanakuma-cho Chuo-ku**
**Kobe-shi Hyogo-ken (JP)**

(74) Representative: **Senior, Alan Murray et al
J.A. KEMP & CO 14 South Square Gray's Inn
London WC1R 5EU (GB)**

Courier Press, Leamington Spa, England.

## Description

The present invention relates to molten metal stirring apparatus to stir molten metal by sucking the molten metal into a riser linked to a melting furnace beneath the surface of molten metal in the melting furnace, and returning the molten metal in the riser into the melting furnace.

In the prior art clogging often occurs in the vicinity of the position which the surface of molten metal being sucked into the riser reaches. Air is supplied when the molten metal in the riser is returned into the melting furnace. As a result, the molten metal is oxidized, and the oxides deposit on the all of riser, or the molten metal in the riser is partly solidified to cause clogging of the riser.

US—A—4 236 917 discloses stirring by providing a riser linked to the melting furnace beneath the surface of molten metal, the end of the riser being connected by a changeover valve to either a vacuum source or a source of gas under pressure. The molten metal is alternately drawn into the riser under the action of the vacuum, and expelled back into the furnace by the action of the pressurised gas.

Accordingly, it is an object of the present invention to reduce clogging within the riser and present a molten metal stirring equipment having a simple construction.

In the prior art, for example, the upper end of the riser linked to the melting furnace beneath the surface of molten metal in the melting furnace is changed over and connected to the vacuum source or gas source by way of a changeover valve. As such changeover valves, solenoid valves are widely used, but they are short in service life and often interrupt the continuous operation to melt the metal.

It is another object of the present invention to present a molten metal stirring equipment which is easier to maintain.

According to the present invention, there is provided molten metal stirring apparatus for a melting furnace such apparatus including a riser opening into the melting furnace beneath level of the surface of molten metal in the melting furnace when the furnace is in use, a changeover valve connected to the upper end of the riser, and a vacuum source for applying reducing pressure inside the upper end of the riser connected to the changeover valve, characterised by duct means for leading exhaust gas from the melting furnace to the upper end of the riser, connected to the changeover valve, and an electric heater for heating the riser provided in the vicinity of the surface of the molten metal when sucked in the riser.

Preferably the apparatus includes further heating means for heating the riser and located coaxially with and on the outer periphery of the riser below said electric heater.

According to this invention, an electric heater is provided in the vicinity of the position of the surface of the molten metal when sucked in the riser and is intended to keep the temperature in the riser high, so that solidification of the molten metal in the riser may be prevented. In addition, exhaust gas is supplied when the molten metal sucked in the riser returns to the melting furnace, which inhibits the oxidation of the molten metal sucked in the riser. Therefore, the riser suffers less clogging by deposits of oxides of molten metal. Still more, since the temperature of exhaust gas is relatively high, for example 440 to 550°C, the temperature drop of the molten metal in the riser may be reduced.

According to a preferred embodiment of the invention, since the inner wall of the riser is lined with silicon carbide refractories containing silicon nitride bonding or silicon oxynitride bonding, the deposit of molten metal on the riser is restricted, and the strength of riser, such as spalling resistance, may be improved.

With the invention, since gas is supplied at atmospheric pressure into the upper end of the riser when returning the molten metal sucked in the riser into the melting furnace, stirring within the melting furnace is realized by gravity drop of the molten metal, so that agitation of the melting furnace may be possible in a simple construction.

Preferably the changeover valve is operated by gas pressure, so that switching involving electric contacts as experienced in the prior art is not necessary, which facilitates maintenance.

The invention will be more clearly understood from the following description which is given by way of example only with reference to the accompanying drawings, in which:

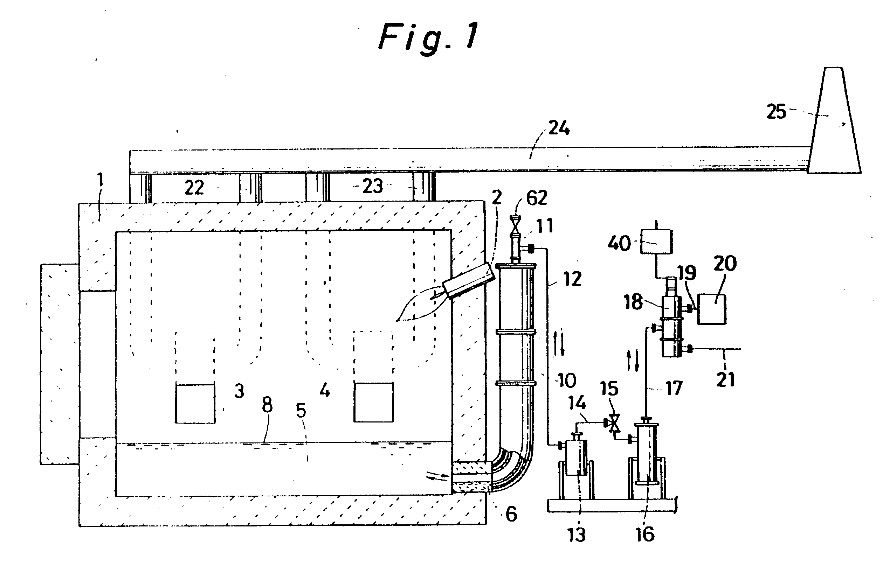

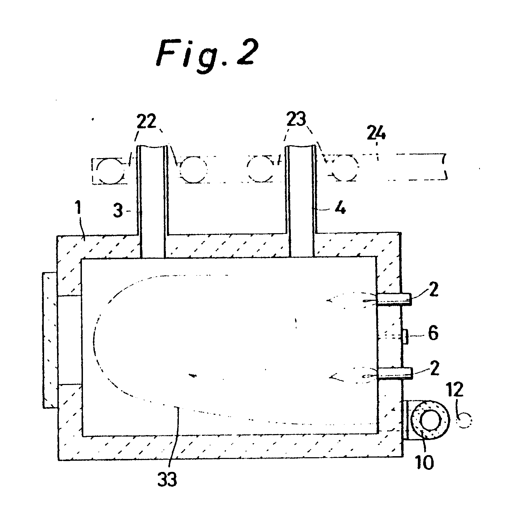

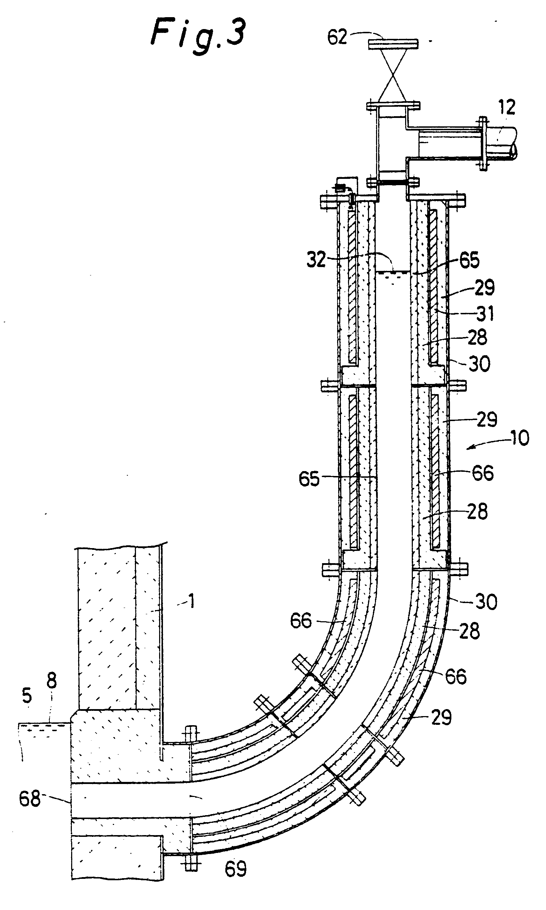

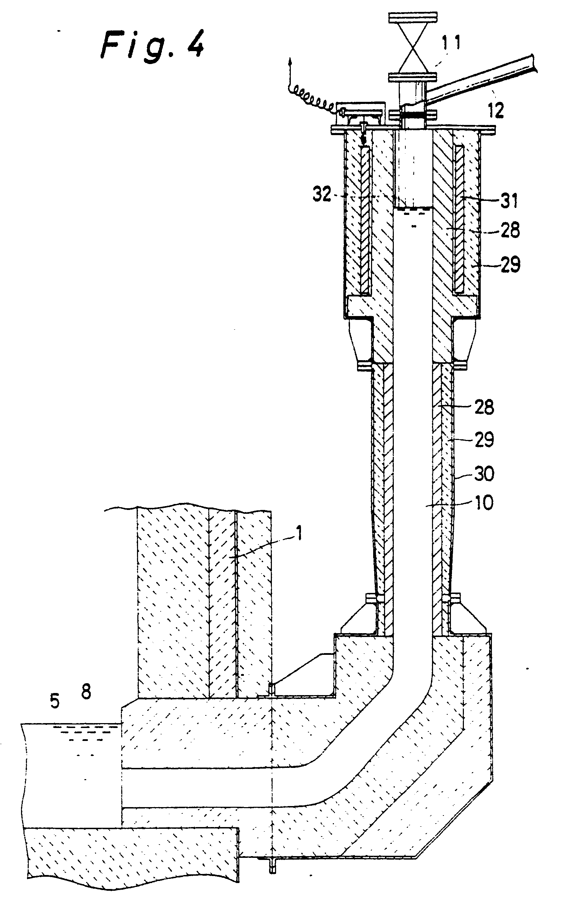

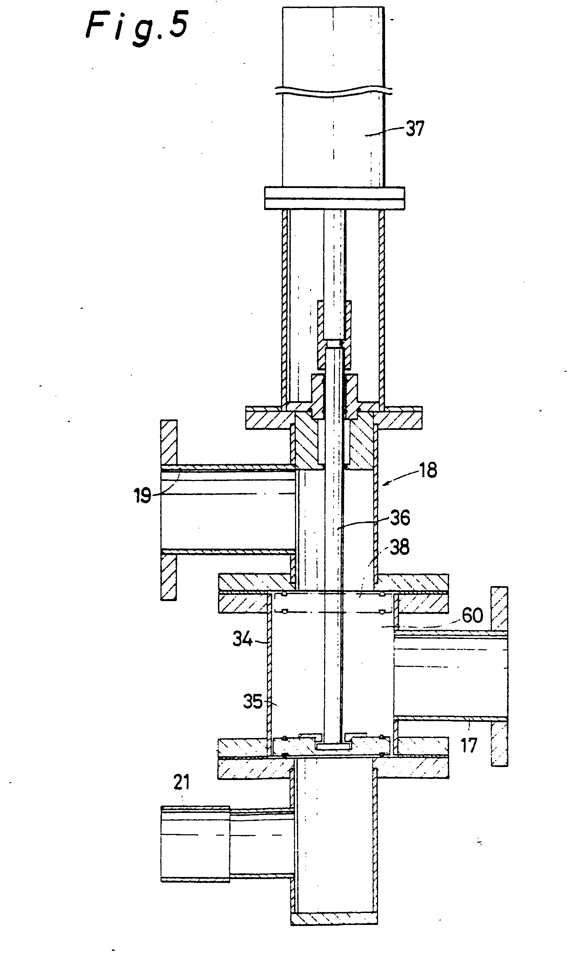

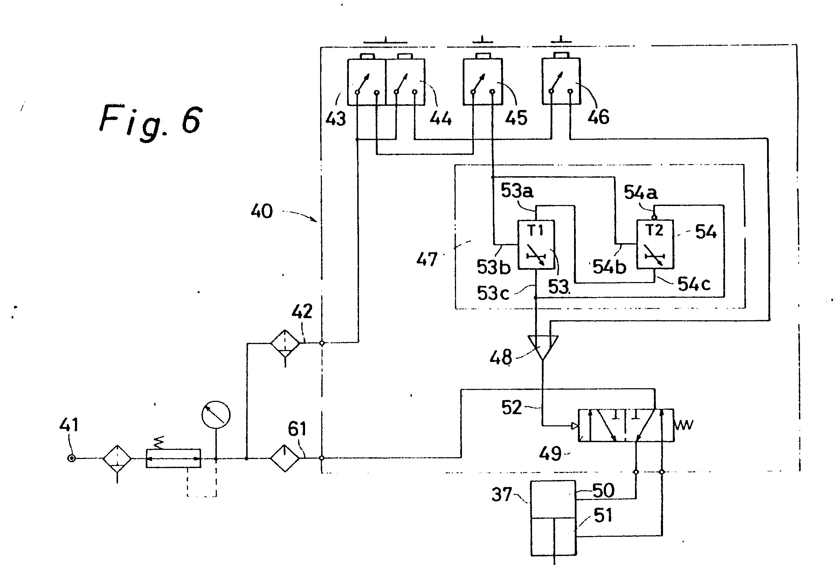

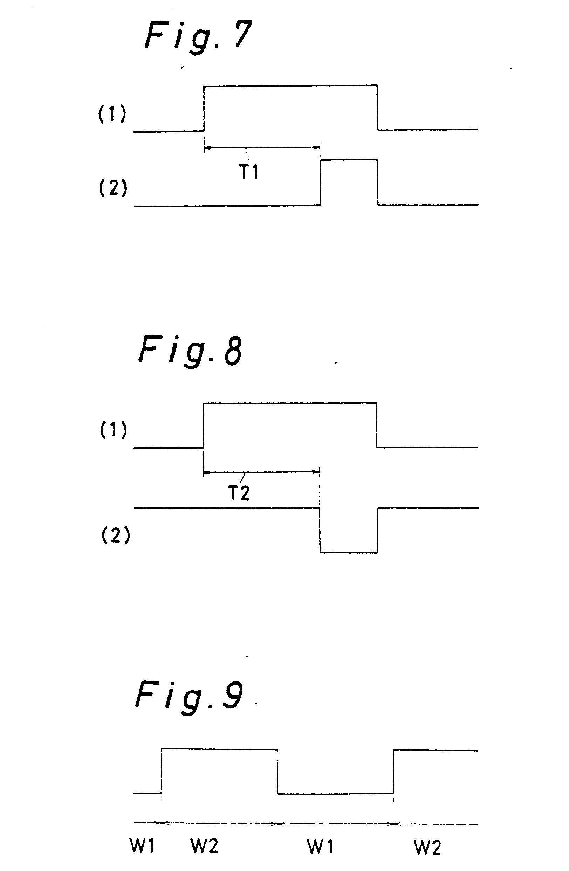

Figure 1 is a vertical section of one of the embodiments, Figure 2 is its cross section, Figure 3 is a magnified section of a riser, Figure 4 is a magnified section of a riser in other embodiment, Figure 5 is a sectional view of a three-way changeover valve, Figure 6 is an pneumatic circuit diagram of control device, Figure 7 is a waveform diagram showing the operating state of on-delay circuit, Figure 8 is a waveform diagram showing the operating state of off-delay circuit, and Figure 9 is a waveform diagram showing the operating state of timer circuit.

Hereinafter are described the embodiments of the present invention while referring to the drawings.

Figure 1 is a vertical section of one of the embodiments of the present invention and Figure 2 is its horizontal section. A burner 2 is provided in a melting furnace 1. Ingot or scraps charged through the charge preheat chambers 3, 4 are melted as indicated by reference code 5. One of such molten metals 5 may be, for example, aluminum. The molten metal 5 is taken out to the outside from an outlet 6.

Near the corner of melting furnace 1, and lower than the surface 8 of molten metal 5 in the melting furnace 1, a riser 10 is installed. This riser 10 extends vertically outside the melting furnace 1. An inspection window 62 is provided in the upper end 11 of the riser 10. The upper end 11 is linked with a protective tank 13 by way of pipeline 12. The protective tank 13 is linked with a filter 16 by way of duct 14 and valve 15. The filter 16 is linked with a three-way changeover valve 18 via pipeline 17. The pipeline 17 is connected to a vacuum source 20 via the valve 18 and a pipe-line 19. At the same time, the pipeline 17 is also connected to another pipeline 21 via the valve 18. Duct 22, 23 to lead the exhaust gas from the melting furnace 1 are linked with charge preheat chambers 3, 4. These ducts 22, 23 are led to a stack 25 through duct 24, and are released to the atmosphere. The pipeline 21 is connected to the duct 24. The protective tank 13 is intended to prevent the molten metal 5 sucked in the riser 10 from partly flowing into the pipeline 12 to run into the pipe-line 14 and subsequent units so as to protect the subsequent units.

Figure 3 is a magnified section of the riser 10. An inlet 68 of molten metal into the riser 10 of melting furnace 1 is shaped in a circular form, but it it not limited to circular form. For example, it may be shaped in an oval form extending in the horizontal direction (the direction vertical to the sheet surface of Figure 3) or other form, provided that it be shaped in circular form in the bottom 69 of the riser 10. The inner wall of the riser 10 is lined with silicon carbide refractories 65 containing silicon nitride bonding or silicon oxynitride bonding. The chemical composition of the silicon carbide refractories 65 is, for example, silicon carbide 78.0 wt.%, silicon dioxide 3.0 wt.%, ferric oxide 0.4 wt.%, and sum of silicon nitride ($Si_3N_4$) and silicon oxynitride ($Si_2ON_2$) 18.0 wt.%. The outer periphery of the silicon carbide refractories is covered, for example, with ceramic heat insulating material 28. An electric heater 31 is provided at the upper end of the riser 10 on the outside of the heat insulating material 28. This electric heater 31 is electrically energized to heat the inner temperature of the heat insulating material 28 surrounded with the electric heater 31 to temperatures higher than the melting point of the molten metal, for example, 650 to 750°C. This prevents solidification of the molten metal in the vicinity of the surface 32 where the molten metal sucked in the riser 10 reaches. Besides, beneath the electric heater 31, another electric heater 66 is provided coaxially with the riser and along its entire circumference and overall length. This electric heater 66 is similarly energized with electric power to heat the inner parts of the heat insulating material 28 surrounded by the electric heater 66 to temperatures higher than the melting point of the molten metal. Accordingly, solidification of the molten metal in the riser 10 is prevented. The outer surfaces of the electric heaters 31 and 66 are covered with insulators 29, which are further covered with outer skin 30 made of iron or similar material. The insulators 29 may be, for example, castable refractories made of alumina cement.

When the pipelines 17 and 19 are connected together by way of three-way valve changeover valve 18, the pipeline 12 is lowered in pressure, and the molten metal 5 in the melting furnace is sucked into the riser 10. The surface of the sucked molten metal 5 in the riser 10 is, as clearly shown in Figure 3, near the reference code 32. Thereafter, the three-way changeover valve is changed over, and the pipeline 17 is connected with the pipeline 21. Hence, exhaust gas is led into the pipeline 12 from the duct 24 through the pipeline 21. The temperature of the exhaust gas is relatively high, for example, 400 to 550°C. The exhaust gas is introduced into the riser 10 as the molten metal in the riser 10 returns to the melting furnace by gravity. Thus, since the natural gravity drop of the molten metal is utilized, the constitution may be simplified. As the molten metal in the riser returns to the melting furnace 1, the molten metal in the melting furnace is stirred by indicated by arrow 33 in Figure 2. In this embodiment, the riser 10 is provided near the corner of melting furnace 1, but it may be located in other position.

The oxygen concentration of the exhaust gas is low, and oxidation of the molten metal sucked in the riser 10 is inhibited. It also contributes to restriction of clogging due to oxides in the riser 10.

Figure 4 is a magnified section of riser 10 showing other embodiment, wherein the parts corresponding to those used in the preceding embodiment are given the same reference codes. The inside of the riser 10 in its radial direction is composed of heat insulating materials 28, which are externally covered with insulators 29. The insulators 29 are further covered with iron or other outer skin 30. At the upper end of the riser, an electric heater 31 is provided in a way to surround the heat insulating materials 28. This electric heater 31 is electrically energized to heat the inner parts of the heat insulating materials 28 surrounded by the electric heater 31 to temperatures higher than the melting point of the molten metal, for example 650 to 750°C. As a result, solidification of the molten metal is prevented in the vicinity of the surface 32 where the molten metal sucked in the riser 10 reaches. Hence, clogging in the riser 10 is prevented.

Figure 5 is a sectional view showing an actual constitution of three-way changeover valve 18. A valve disc 35 is housed in a valve casing 34. A valve stem 36 fixed to this valve disc 35 is controlled by a control unit 40 shown in Figure 1. The valve stem is displaced and driven reciprocally in the axial direction (the vertical direction in Figure 5) by means of a pneumatic cylinder 37. When the pneumatic cylinder 37 is extended and the valve disc 35 is in a state shown in Figure 5, the pipeline 17 is communicated with the pipeline 19 by way of valve chest 60, so that the molten metal 5 is sucked into the riser 10. When the pneumatic cylinder 37 is contracted and the valve disc 35 is held in a position indicated by assumed line 38, the pipeline 17 is communicated with the pipeline 21 by way of valve chest 60, so that exhaust gas is supplied into the riser 10. Meanwhile, the three-way changeover valve 18 may be realized naturally in other constitution.

In the preceding embodiment, the electric heater 66 is provided coaxially with the riser 10 and along its entire circumference and overall length, beneath the position where the electric heater 31 is provided at the upper end of the riser 10, in a manner to surround the heat insulating materials 28. In another embodiment, the electric heater 66 may be partially provided coaxially with the riser 10 and externally surrounding it.

In the preceding embodiment, the heating means consisted of electric heaters 31 and 66 provided coaxially with the riser and along its entire circumference and overall length. However, in other embodiment, the heating means may be so constituted to supply high temperature gas higher than the melting point of the molten metal beneath the electric heater, coaxially with the riser 10 and along its entire circumference and overall length, in place of electric heater 66.

Figure 6 is a pneumatic circuit diagram of control unit 40 for controlling the pneumatic cylinder 37 for driving the three-way changeover valve 18. The air pressure from the air pressure source 41 is applied from the pipeline 42 to operating valves 43, 44. The operating valve 43 is connected to an operating valve 45. The operating valve 44 is connected to an operating valve 46. The air pressure from the operating valve 45 is applied to a timer circuit 47. The air pressure from the timer circuit 47 and operating valve 46 is applied from the OR circuit 48 and pilot pipeline 52 as the pilot pressure of two-position changeover valve 49 of spring offset type pilot operating system. The air pressure from the air pressure source 41 is changed over and given to either chamber 50 or 51 of the pneumatic cylinder 37 by way of changeover valve 49 from the pipeline 61.

In order to stir the molten metal 5 in the melting furnace 1 automatically, the operating valves 43, 45 are operated in communicated state. Hence, the timer circuit 47 releases supply of air pressure into pilot pipeline 52 for a first time W1 as shown in Figure 9, and supplies air pressure to the pilot pipeline 52 for the next time W2. Thus, the chamber 50 in the pneumatic cylinder 37 is raised to high pressure for time W1, and the pipelines 17 and 19 are communicated with each other, and the molten metal 5 is sucked into the riser 10. In the next time W2, the chamber 51 in the pneumatic cylinder 37 is raised to high pressure, and the pipelines 17 and 21 are communicated with each other, thereby supplying exhaust gas into the riser 10. For example, the duration of W1 is 4 to 10 seconds, and that of W2 2 to 4 seconds.

The on-delay circuit 53 contained in the timer circuit 47 operates as shown in Figure 7. This on-delay circuit 53 communicates ports 53b and 53c after lapse of time T1 as shown in Figure 7 (2) when an air pressure indicated by Figure 7 (1) is given to pilot port 53a. On the other hand, an off-delay circuit 54 disconnects ports 54b, 54c after lapse of timer T2 as shown in Figure 8 (2) when an air pressure indicated by Figure 8 (1) is given to pilot port 54a.

When changing the changeover valve 49 manually, the operating valve 44 should be kept in communicated state, and the operating valve 46 is disconnected. In this state, air pressure is not supplied to the pilot pipeline 52, and the riser 10 is connected with the vacuum source 20. When the operating valve 46 is communicated while the operating valve 44 is kept in communicated state, an air pressure is applied to the pilot pipeline 52, so that exhaust gas may be supplied to the riser 10.

## Claims

1. Molten metal stirring apparatus for a melting furnace such apparatus including a riser (10) opening into the melting furnace (1) beneath level of the surface (8) of molten metal (5) in the melting furnace (1) when the furnace is in use, a changeover valve (18) connected to the upper end (11) of the riser (10), and a vacuum source (20) for applying reducing pressure inside the upper end (11) of the riser (10) connected to the changeover valve (18), characterised by duct means (22, 23, 24) for leading exhaust gas from the melting furnace (1) to the upper end (11) of the riser (10), connected to the changeover valve (18), and an electric heater (31) for heating the riser (10) provided in the vicinity of the surface (32) of the molten metal (5) when sucked in the riser (10).

2. Apparatus according to claim 1 characterised by further heating means (66) for heating the riser and located coaxially with and on the outer periphery of the riser below said electric heater (31).

3. Apparatus according to claim 1 or 2 characterised in that the inner wall of the riser (10) is lined with silicon carbide refractories having silicon nitride bonding or silicon oxynitride bonding.

4. Apparatus according to claim 1, 2 or 3 characterised in that the changeover valve (18) is operated by gas pressure.

## Patentansprüche

1. Rührgerät für eine Metallschmelze eines Schmelzofens, mit einer Steigleitung (10), die im Betrieb des Ofens neben dem Oberflächenspiegel (8) der metallschmelze (5) in den Schmelzofen (1) einmündet, einem Umschaltventil (18), das am oberen Ende (11) der Steigleitung (10) angeschlossen ist und mit einer Vakuumquelle (20) zum Anlegen eines Unterdruckes im Inneren des oberen Endes der Steigleitung (10), die mit dem Umschaltventil (18) verbunden ist, dadurch gekennzeichnet, dass Rohreinrichtungen (22, 23, 24) zur Abgasführung vom Schmelzofen (1) zum oberen Ende (11) der Steigleitung (10) vorgesehen sind, die mit dem Umschaltventil (18) verbunden sind, und dass ein elektrischer Erhitzer (31) zur Erhitzung der Steigleitung (10) vorgesehen ist, der in der Nähe der Oberfläche (32) der in die Steigleitung eingesaugten Metallschmelze (5) angeordnet ist.

2. Gerät nach Anspruch 1, dadurch gekennzeichnet, dass eine zusätzliche Erhitzungseinrichtung (66) zur Erhitzung der Steigleitung vorgesehen ist, die koaxial zur und am Aussenumfang der Steigleitung unter dem elektrischen Erhitzer (31) angeordnet ist.

3. Gerät nach Anspruch 1 oder 2, dadurch gekennzeichnet, dass die Innenwand der Steigleitung (10) mit feuerfestem Material aus Siliziumkarbit ausgekleidet ist, das mit Siliziumnitrit oder Siliziumoxidnitrit gebunden ist.

4. Gerät nach Anspruch 1, 2 oder 3, dadurch gekennzeichnet, dass das Umschaltventil (18) durch Gasdruck betätigbar ist.

**Revendications**

1. Equipement d'agitation du métal liquide pour un four de fusion, cet équipement comportant un conduit ascendant (10) s'ouvrant dans le four de fusion (1) en-dessous du niveau de la surface (8) du métal liquide (5) dans le four de fusion (1) lorsque le four est en service, une vanne de commutation (18) raccordée à l'extrémité supérieure (11) du conduit ascendant (10) et une source de vide (20) destinée à appliquer une pression réduite à l'intérieur de l'extrémité supérieure (11) du conduit ascendant (10) raccordée à la vanne de commutation (18) caractérisé en ce que des moyens de conduits (22, 23, 24) amènent des gaz brûlés du four de fusion (1) à l'extrémité supérieure (11) du conduit ascendant (10), raccordée à la vanne de commutation (18), et en ce qu'un dispositif de chauffage électrique (31) pour chauffer le conduit ascendant (10) est prévu au voisinage de la surface (32) du métal liquide (5) aspiré dans le conduit ascendant (10).

2. Equipement selon la revendication 1, caractérisé en ce que d'autres moyens de chauffage (66) pour chauffer le conduit ascendant sont disposés coaxialement à celui-ci et sur sa périphérie extérieure en-dessous du dispositif de chauffage électrique (31).

3. Equipement selon la revendication 1 ou la revendication 2, caractérisé en ce que la paroi intérieure du conduit ascendant (10) est revêtue de réfractaires à base de carbure de silicium, contenant un agent de liaison à base de nitrure de silicium ou d'oxynitrure de silicium.

4. Equipement selon la revendication 1, 2 ou 3, caractérisé en ce que la vanne de commutation (18) est commandée par un gaz sous pression.

# Fig. 1

0 092 983

# Fig.2

# Fig.3

# Fig. 4

Fig.5

# Fig. 6

# Fig. 7

(1)

(2)

T1

# Fig. 8

(1)

(2)

T2

# Fig. 9

W1    W2         W1         W2